# EUROPÄISCHE PATENTSCHRIFT

(11) **EP 2 223 287 B1**
(45) Veröffentlichungstag und Bekanntmachung des Hinweises auf die Patenterteilung: **02.01.2019**
(21) Anmeldenummer: 08859988.1
(22) Anmeldetag: 04.12.2008
(51) Int. Cl.: G07C 5/08, G01P 1/12

(54) **VORRICHTUNG ZUM ÜBERPRÜFEN DER PLAUSIBILITÄT EINES WERTS EINER BEWEGUNGSABHÄNGIGEN GRÖSSE**
DEVICE FOR CHECKING THE PLAUSIBILITY OF A VALUE OF A MOVEMENT-DEPENDENT VARIABLE
DISPOSITIF DE CONTRÔLE DE LA PLAUSIBILITÉ D'UNE VALEUR D'UN PARAMÈTRE DÉPENDANT D'UN DÉPLACEMENT

(30) Priorität: 12.12.2007 DE 102007059785
(43) Veröffentlichungstag der Anmeldung: 01.09.2010
(73) Patentinhaber: Continental Automotive GmbH, 30165 Hannover (DE)
(72) Erfinder: HERTZNER, Alfred, 78078 Niedereschach-Fischbach (DE); PFAFF, Thomas, 78048 Villingen-Schwenningen (DE); ROMBACH, Gerhard, 78098 Triberg (DE); STEINER, Bruno, 78183 Hüfingen (DE)
(86) Internationale Anmeldenummer: PCT/EP2008/066774
(87) Internationale Veröffentlichungsnummer: WO 2009/074503

(56) Entgegenhaltungen:
- EP-A- 0 553 478
- WO-A-2006/027297
- US-A- 4 450 403
- US-A- 6 144 927
- US-A1- 2003 088 348

## Beschreibung

Die Erfindung betrifft eine Vorrichtung zum Überprüfen der Plausibilität eines Werts einer bewegungsabhängigen Größe.

Vorrichtungen zum Überprüfen der Plausibilität eines Werts einer bewegungsabhängigen Größe können zu vielfältigen Zwecken eingesetzt werden, insbesondere zum Einsatz in Fahrtenschreibern für Kraftfahrzeuge und besonders bevorzugt zum Einsatz in digitalen Fahrtenschreibern. Ein digitaler Fahrtenschreiber, der auch als digitaler Tachograph bezeichnet wird, speichert in einer Blackbox für einen vorgegebenen Zeitraum, beispielsweise für ein Jahr und auf einer personengebundenen Fahrerkarte, die als Chipkarte ausgebildet ist, beispielsweise für einen Monat, alle in Frage kommenden Ereignisse, die mit dem Fahrbetrieb in Beziehung stehen. So werden Lenk-, Arbeits-, Bereitschafts- und Ruhezeiten, sowie deren Unterbrechungen und zurückgelegte Streckenlängen gespeichert. Ferner werden Höchstgeschwindigkeiten innerhalb der letzten 24 Stunden vermerkt. Die gesamten Daten können von Kontrollbehörden oder dem Halter des Fahrzeugs entsprechend vorgegebener gesetzlicher Vorschriften digital ausgelesen werden. An die Aufnahme und Speicherung dieser Daten werden hohe Anforderungen hinsichtlich der Manipulationssicherheit gestellt.

Die EP 0 553 478 A2 offenbart eine Einrichtung zum Nachweis von Störungen der Signalübertragung zwischen Geschwindigkeitsmess- und/oder Streckenzählgeräten und außerhalb dieser Geräte angeordneten Drehwertgebern in Kraftfahrzeugen, wobei wenigstens ein fahrttypische Kräfte sensierender Bewegungsgeber innerhalb des Messgeräts angeordnet ist und eine Auswerteschaltung vorgesehen ist, die bei Nichtplausibilität von Signalen des Drehwertgebers mit Signalen des Bewegungsgebers ein Störsignal liefert.

Die Aufgabe der Erfindung ist es, eine Vorrichtung zum Überprüfen der Plausibilität eines Werts einer bewegungsabhängigen Größe zu schaffen, die sicher und kostengünstig ist.

Die Aufgabe wird gelöst durch die Merkmale des unabhängigen Patentanspruchs. Vorteilhafte Ausgestaltungen der Erfindung sind in den Unteransprüchen gekennzeichnet.

Dies hat den Vorteil, dass so ein Erkennen von Manipulationen am Drehwertgeber und/oder an der elektrischen Verbindung zwischen dem Drehwertgeber und der Signalerfassungs- und Auswerteeinheit möglich ist, wodurch ein hoher Sicherheitsstandard erreicht werden kann.

In einer vorteilhaften Ausführungsform ist die Signalerfassungs- und Auswerteeinheit ausgebildet zum Vergleichen des Inertialsensorsignals mit dem analogen Echtzeitsignal. Die Signalerfassungs- und Auswerteeinheit ist damit ausgebildet zum Vergleichen des Inertialsensorsignals sowohl mit dem analogen Echtzeitsignal als auch mit dem digitalen Signal. Es ist so möglich, einen besonders hohen Sicherheitsstandard beim Erkennen von Manipulationen am Drehwertgeber und/oder an der elektrischen Verbindung zwischen dem Drehwertgeber und der Signalerfassungs- und Auswerteeinheit zu erreichen.

In einer weiteren vorteilhaften Ausführungsform ist das digitale Signal kryptographisch verschlüsselt. Durch das kryptographische Verfahren können Verfälschungen am Drehwertgeber und/oder an der Verbindung zwischen dem Drehwertgeber und der Signalerfassungs- und Auswerteeinheit besonders gut erkannt werden.

In einer weiteren vorteilhaften Ausführungsform ist der Inertialsensor ein Sensor zum Messen einer Beschleunigung. Damit ist eine Verwendung hoch integrierter und kostengünstiger Sensoren zum Vergleichen der Signale möglich.

In einer weiteren vorteilhaften Ausführungsform ist der Inertialsensor ein Gyroskop. Damit ist eine Verwendung hochgenauer Sensoren zur Feststellung von Richtungsänderungen zum Vergleichen der Signale möglich.

In einer weiteren vorteilhaften Ausführungsform ist innerhalb der Signalerfassungs- und Auswerteeinheit eine Positionsbestimmungsvorrichtung angeordnet, die ausgebildet ist zur Aufnahme einer Information eines satellitengestützten Positionsbestimmungssystems zu der Position der Signalerfassungs- und Auswerteeinheit. Damit ist es möglich, eine weitere redundante Information über den Wert der bewegungsabhängigen Größe zu erhalten.

In einer weiteren vorteilhaften Ausführungsform weist die Positionsbestimmungsvorrichtung einen Empfänger für das GPS-System oder für das Galileo-System auf. Damit ist ein bewährtes beziehungsweise innovatives Positionsbestimmungssystem für die Positionsbestimmungsvorrichtung einsetzbar.

In einer weiteren vorteilhaften Ausführungsform weist die Vorrichtung zum Überprüfen der Plausibilität eines Werts einer bewegungsabhängigen Größe eine mit der Positionsbestimmungsvorrichtung gekoppelte Antenne auf, die außerhalb der Signalerfassungs- und Auswerteeinheit angeordnet ist. Damit ist ein guter Empfang der Positions- und Bewegungsdaten für die Positionsbestimmungsvorrichtung möglich.

In einer weiteren vorteilhaften Ausführungsform weist die Vorrichtung zum Überprüfen der Plausibilität eines Werts einer bewegungsabhängigen Größe ein Befestigungselement auf, wobei der Inertialsensor mit dem Befestigungselement drehbar in der Signalerfassungs- und Auswerteeinheit befestigbar. Damit kann der Inertialsensor sehr genau ausgerichtet werden, wodurch eine hohe Empfindlichkeit des Inertialsensors für Bewegungen erreicht werden kann.

Ausführungsbeispiele der Erfindung sind im Folgenden anhand der schematischen Zeichnung näher erläutert.

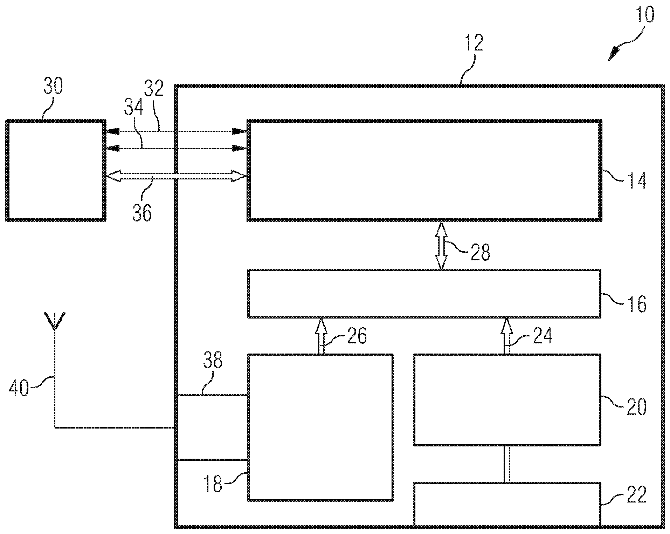

Die einzige Figur zeigt eine schematische Ansicht einer Vorrichtung 10 zum Überprüfen der Plausibilität eines Werts einer bewegungsabhängigen Größe.

Die Vorrichtung 10 zum Überprüfen der Plausibilität eines Werts einer bewegungsabhängigen Größe hat eine Signalerfassungs- und Auswerteeinheit 12, die eine Vielzahl von internen Einrichtungen und Verbindungsleitungen aufweist.

Die Vorrichtung 10 zum Überprüfen der Plausibilität eines Werts einer bewegungsabhängigen Größe ist bevorzugt in einem Fahrtenschreiber eines Kraftfahrzeugs angeordnet. Die sichere und vorzugsweise bezüglich der Sicherheit zertifizierte Hardware in dem Fahrtenschreiber bietet eine sichere Umgebung für Datenverarbeitung und Datenspeicherung. Insbesondere können in dem Fahrtenschreiber auch kryptographische Schlüssel und/oder digitale Zertifikate und andere Daten sicher gespeichert werden. Weiter ist der Fahrtenschreiber ausgebildet, um sichere und vorzugsweise sicherheitszertifizierte kryptographische Algorithmen ausführen zu können. Der Fahrtenschreiber umfasst dazu eine kryptographische Funktionseinheit, die insbesondere in der Signalerfassungs- und Auswerteeinheit 12 angeordnet ist.

In der Signalerfassungs- und Auswerteeinheit 12 ist eine zentrale Recheneinheit 14 angeordnet, die eine sichere Recheneinheit bildet und bevorzugt zum Ausführen von kryptographischen Algorithmen, zum Beispiel Verschlüsselungs- und/oder Signaturverfahren ausgebildet ist. Die zentrale Recheneinheit 14 ist insbesondere ausgebildet zum Erfassen von Sensordaten, zum Verarbeiten dieser Daten und zum Speichern und Bereitstellen dieser Daten. Vorzugsweise ist die zentrale Recheneinheit 14 dazu ausgebildet die zu verarbeitenden Daten und/oder die auszuführenden Programmcodes auf unbefugte Manipulation oder Verfälschungen zu überprüfen.

Die zentrale Recheneinheit 14 ist über eine Signalleitung 28 mit einer elektrischen Schnittstelle 16 elektrisch gekoppelt. Die Vorrichtung 10 zum Überprüfen der Plausibilität eines Werts einer bewegungsabhängigen Größe kann über die elektrische Schnittstelle 16 zum Überprüfen der Plausibilität eines Werts einer bewegungsabhängigen Größe mit anderen Steuergeräten eines Fahrzeugs gekoppelt werden. Die elektrische Schnittstelle 16 kann zu einem Datenaustausch zwischen der Vorrichtung 10 zum Prüfen der Plausibilität eines Werts der bewegungsabhängigen Größe und den weiteren Steuergeräten des Kraftfahrzeugs ausgebildet sein. Die elektrische Schnittstelle 16 kann insbesondere als "controller area network" (CAN) oder als ein anderer Datenbus für Kraftfahrzeuge ausgebildet sein, zum Beispiel als "local interconnect network" (LIN) oder als "media oriented systems transport" (MOST). Damit kann bevorzugt eine Datenkommunikation mit den weiteren Steuergeräten des Kraftfahrzeugs stattfinden.

In der Vorrichtung 10 zum Überprüfen der Plausibilität eines Werts einer bewegungsabhängigen Größe ist weiter ein Inertialsensor 20 angeordnet, der ein Inertialsensorsignal 24 an die elektrische Schnittstelle 16 und weiter über die Signalleitung 28 an die zentrale Recheneinheit 14 abgegeben kann. Der Inertialsensor 20 ist bevorzugt als Sensor zum Messen einer Beschleunigung ausgebildet. Derartige Sensoren sind bevorzugt als hoch integrierte Sensoren ausgebildet. In einer weiteren Ausführungsform ist der Inertialsensor 20 vorzugsweise als Gyroskop ausgebildet. Es ist so möglich, dass das Gyroskop eine Mehrachsmessung ausführen kann und eine hohe Genauigkeit aufweist. Der Inertialsensor 20 ist bevorzugt auf einem Befestigungselement 22 innerhalb der Signalerfassungs- und Auswerteeinheit 12 angeordnet. Das Befestigungselement 22 ist so ausgebildet, dass der Inertialsensor 20 damit drehbar gelagert ist. Damit ist eine Ausrichtung des Inertialsensors 20 möglich, damit dieser in Hinblick auf die Bewegungen der Vorrichtung 10 zum Überprüfen der Plausibilität eines Werts einer bewegungsabhängigen Größe eine hohe Empfindlichkeit aufweist.

Innerhalb der Signalerfassungs- und Auswerteeinheit 12 ist weiter eine Positionsbestimmungsvorrichtung 18 angeordnet, mit der Informationen eines satellitengestützten Positionsbestimmungssystems bezüglich der Position der Signalerfassung- und Auswerteeinheit 12 aufgenommen werden können. Bevorzugt ist die Positionsbestimmungsvorrichtung 18 ein Empfänger zum Empfangen von Positions- und Zeitinformationen, beispielsweise dem "global positioning system" (GPS) oder dem Galileo-System. Über einen Antennenanschluss 38 ist die Positionsbestimmungsvorrichtung 18 mit einer Antenne 40 gekoppelt, die außerhalb der Signalerfassungs- und Auswerteeinheit 12 angeordnet ist. Es ist so möglich, dass die Positionsbestimmungsvorrichtung 18 auf sichere Weise ein Signal des GPS- oder Galileo-Systems erhält. Die Positionsbestimmungsvorrichtung 18 kann ein Positionsdatensignal 26 vorzugsweise über die elektrische Schnittstelle 16 an die zentrale Recheneinheit 14 abgeben.

Außerhalb der Signalerfassungs- und Auswerteeinheit 12 ist ein Drehwertgeber 30 angeordnet. Der Drehwertgeber 30 ist vorzugsweise mit einem Getriebe des Kraftfahrzeugs gekoppelt. Er kann dort beispielsweise mit einem Rad zusammenwirken, wobei durch einen Abgriff am Getriebe des Fahrzeugs eine Impulszahl ermittelt wird. Zwischen dem Drehwertgeber 30 und der Signalerfassungs- und Auswerteeinheit 12 ist vorzugsweise eine gesicherte Verbindungsleitung 36 angeordnet, über die ein analoges Echtzeitsignal 32 und ein digitales Signal 34, das als Referenz des analogen Echtzeitsignals 32 ausgebildet ist, von dem Drehwertgeber 30 an die Signalerfassungs- und Auswerteeineinheit 12 abgegeben wird. Das digitale Signal 34 ist vorzugsweise kryptologisch verschlüsselt und wird bevorzugt zyklisch von dem Drehwertgeber 30 an die Signalerfassungs- und Auswerteeinheit 12 abgegeben.

Im Folgenden soll die Funktion der Vorrichtung 10 zum Überprüfen der Plausibilität eines Werts einer bewegungsabhängigen Größe im Detail beschrieben werden:
Der Drehwertgeber 30 zur Erfassung des Werts der bewegungsabhängigen Größe gibt das analoge Echtzeitsignal 32 und das digitale Signal 34 an die zentrale Recheneinheit 14 ab. Das digitale Signal 34 ist ein Referenz- oder Kontrollsignal des analogen Echtzeitsignals 32. Von dem Inertialsensor 20 innerhalb der Signalerfassungs- und Auswerteeinheit 12 wird das Inertialsensorsignal 24 an die zentrale Recheneinheit 14 abgegeben.

In der zentralen Recheneinheit 14 der Signalerfassungs- und Auswerteeinheit 12 wird das Inertialsensorsignal 24 mit dem digitalen Signal 34 und/oder mit dem analogen Echtzeitsignal 32 verglichen. Vorzugsweise erfolgt die Abgabe des Inertialsensorsignals 24 permanent, wodurch das digitale Signal 34 und das analoge Echtzeitsignal 32 kontinuierlich und unterbrechungsfrei überwacht werden können. Die Vergleichsinformation wird ausgewertet und gegebenenfalls in einem Speicher der Signalerfassungs- und Auswerteeinheit 12 abgelegt. Mit Hilfe des Inertialsensorsignals 24 kann damit ein Plausibilitätstest bezüglich des Drehwertgebers 30 im Hinblick auf die Position, die Geschwindigkeit oder die Beschleunigung der Vorrichtung 10 zum Überprüfen der Plausibilität eines Werts einer bewegungsabhängigen Größe erreicht werden, und damit auch des Kraftfahrzeugs, in dem die Vorrichtung 10 zum Überprüfen der Plausibilität eines Werts einer bewegungsabhängigen Größe angeordnet ist. Manipulationen an dem Drehwertgeber 30 und/oder an der gesicherten Verbindungsleitung 36 zwischen dem Drehwertgeber 30 und der Signalerfassungs- und Auswerteeinheit 12 können so einfach und sicher erkannt werden. Des Weiteren kann auf diese Weise das Geschwindigkeits- und/oder Beschleunigungsprofil des Kraftfahrzeugs sicher und manipulationsfrei einfach ermittelt werden. Des Weiteren ist eine Aufzeichnung über Unfallvorgänge des Kraftfahrzeugs möglich.

Die aus dem Inertialsensorsignal 24 erhaltenen Informationen können über die elektrische Schnittstelle 16 an die weiteren Steuergeräte in dem Kraftfahrzeug geleitet werden.

Mittels des Einsatzes der satellitengestützten Positionsbestimmungsvorrichtung 18 kann eine weitere redundante Information zur Überprüfung und Überwachung des Drehwertgebers 30 bereitgestellt werden. Dies ist besonders dann vorteilhaft, wenn über die Antenne 40 die Daten des GPS- beziehungsweise Galileo-Positionsbestimmungssystems gut zu empfangen sind.

Des Weiteren ist es möglich, dass das Inertialsensorsignal 24 des Inertialsensors 20 dazu genutzt wird, den Drehwertgeber 30 ein- beziehungsweise auszuschalten. Dies ist besonders vorteilhaft, wenn der Drehwertgeber 30 derart ausgebildet ist, dass er im Betriebsfall elektrische Energie verbraucht. Mit Hilfe des Inertialsensors 20 ist es damit möglich, eine Powermanagement-Funktion für den Drehwertgeber 30 zu implementieren.

## Patentansprüche

1. Vorrichtung (10) zum Überprüfen der Plausibilität eines Werts einer bewegungsabhängigen Größe, die aufweist
- einen Drehwertgeber (30) zur Erfassung des Werts der bewegungsabhängigen Größe, wobei der Drehwertgeber (30) ausgebildet ist zur Ausgabe eines analogen Echtzeitsignals (32) und eines digitalen Signals (34), das als eine Referenz des analogen Echtzeitsignals (32) ausgebildet ist,
- eine Signalerfassungs- und Auswerteeinheit (12), die mit dem Drehwertgeber (30) elektrisch gekoppelt ist und die ausgebildet ist zur Aufnahme des analogen Echtzeitsignals (32) und des digitalen Signals (34), wobei der Drehwertgeber (30) außerhalb der Signalerfassungs- und Auswerteeinheit (12) angeordnet ist,
wobei innerhalb der Signalerfassungs- und Auswerteeinheit (12) ein Inertialsensor (20) angeordnet ist, der ausgebildet ist zur Ausgabe eines Inertialsensorsignals (24), und die Signalerfassungs- und Auswerteeinheit (12) ausgebildet ist zum Vergleichen des Inertialsensorsignals (24) mit dem digitalen Signal (34) und zum Vergleichen des Inertialsensorsignals (24) mit dem analogen Echtzeitsignal (32) und wobei innerhalb der Signalerfassungs- und Auswerteeinheit (12) eine Positionsbestimmungsvorrichtung (18) angeordnet ist, die ausgebildet ist zur Aufnahme einer Information eines satellitengestützten Positionsbestimmungssystems zu der Position der Signalerfassungs- und Auswerteeinheit (12), wobei die Vorrichtung (10) eine mit der Positionsbestimmungsvorrichtung (18) gekoppelte Antenne (40) aufweist, die außerhalb der Signalerfassungs- und Auswerteeinheit (12) angeordnet ist.

2. Vorrichtung (10) nach Anspruch 1, wobei das digitale Signal (34) kryptographisch verschlüsselt ist.

3. Vorrichtung (10) nach einem der vorhergehenden Ansprüche, wobei der Inertialsensor (20) ein Sensor zum Messen einer Beschleunigung ist.

4. Vorrichtung (10) nach einem der vorhergehenden Ansprüche, wobei der Inertialsensor (20) ein Gyroskop ist.

5. Vorrichtung (10) nach einem der vorhergehenden Ansprüche, wobei die Positionsbestimmungsvorrichtung (18) einen Empfänger für das GPS-System oder für das Galileo-System aufweist.

6. Vorrichtung (10) nach einem der vorhergehenden Ansprüche, die ein Befestigungselement (22) aufweist, wobei der Inertialsensor (20) mit dem Befestigungselement (22) drehbar in der Signalerfassungs- und Auswerteeinheit (12) befestigbar ist.

7. Fahrtenschreiber, der in einem Kraftfahrzeug angeordnet ist und ausgebildet ist zur Aufzeichnung von bewegungsabhängigen Größen des Kraftfahrzeugs und der eine Vorrichtung (10) nach einem der vorhergehenden Ansprüche aufweist.

## Claims

1. Apparatus (10) for checking the plausibility of a value of a movement-dependent variable, having
- a rotary encoder (30) for capturing the value of the movement-dependent variable, wherein the rotary encoder (30) is designed to output an analogue real-time signal (32) and a digital signal (34) which is in the form of a reference of the analogue real-time signal (32),
- a signal capture and evaluation unit (12) which is electrically coupled to the rotary encoder (30) and is designed to receive the analogue real-time signal (32) and the digital signal (34), wherein the rotary encoder (30) is arranged outside the signal capture and evaluation unit (12),
wherein an inertial sensor (20) is arranged inside the signal capture and evaluation unit (12) and is designed to output an inertial sensor signal (24), and the signal capture and evaluation unit (12) is designed to compare the inertial sensor signal (24) with the digital signal (34) and to compare the inertial sensor signal (24) with the analogue real-time signal (32), and wherein a position determination apparatus (18) is arranged inside the signal capture and evaluation unit (12) and is designed to receive an item of information from a satellite-based position determination system relating to the position of the signal capture and evaluation unit (12), wherein the apparatus (10) has an antenna (40) which is coupled to the position determination apparatus (18) and is arranged outside the signal capture and evaluation unit (12).

2. Apparatus (10) according to Claim 1, wherein the digital signal (34) is cryptographically encrypted.

3. Apparatus (10) according to one of the preceding claims, wherein the inertial sensor (20) is a sensor for measuring an acceleration.

4. Apparatus (10) according to one of the preceding claims, wherein the inertial sensor (20) is a gyroscope.

5. Apparatus (10) according to one of the preceding claims, wherein the position determination apparatus (18) has a receiver for the GPS system or for the Galileo system.

6. Apparatus (10) according to one of the preceding claims, having a fastening element (22), wherein the inertial sensor (20) can be rotatably fastened in the signal capture and evaluation unit (12) using the fastening element (22).

7. Tachograph which is arranged in a motor vehicle and is designed to record movement-dependent variables of the motor vehicle and has an apparatus (10) according to one of the preceding claims.

## Revendications

1. Dispositif (10) pour contrôler la plausibilité d'une valeur d'une grandeur dépendante du mouvement, lequel possède
- un transmetteur de valeur de rotation (30) destiné à acquérir la valeur de la grandeur dépendante du mouvement, le transmetteur de valeur de rotation (30) étant configuré pour délivrer un signal en temps réel analogique (32) et un signal numérique (34) qui est réalisé sous la forme d'une référence au signal en temps réel analogique (32),
- une unité d'acquisition et d'interprétation de signal (12), qui est connectée électriquement au transmetteur de valeur de rotation (30) et qui est configurée pour enregistrer le signal en temps réel analogique (32) et le signal numérique (34), le transmetteur de valeur de rotation (30) étant disposé à l'extérieur de l'unité d'acquisition et d'interprétation de signal (12),
un capteur inertiel (20) étant disposé à l'intérieur de l'unité d'acquisition et d'interprétation de signal (12), lequel est configuré pour délivrer un signal de capteur inertiel (24), et l'unité d'acquisition et d'interprétation de signal (12) étant configurée pour comparer le signal de capteur inertiel (24) avec le signal numérique (34) et pour comparer le signal de capteur inertiel (24) avec le signal en temps réel analogique (32) et un dispositif de détermination de position (18) étant disposé à l'intérieur de l'unité d'acquisition et d'interprétation de signal (12), lequel est configuré pour enregistrer une information d'un système de détermination de position assisté par satellite à propos de la position de l'unité d'acquisition et d'interprétation de signal (12), le dispositif (10) possédant une antenne (40) connectée au dispositif de détermination de position (18), laquelle est disposée à l'extérieur de l'unité d'acquisition et d'interprétation de signal (12).

2. Dispositif (10) selon la revendication 1, le signal numérique (34) étant chiffré par cryptographie.

3. Dispositif (10) selon l'une des revendications précédentes, le capteur inertiel (20) étant un capteur servant à mesurer une accélération.

4. Dispositif (10) selon l'une des revendications précédentes, le capteur inertiel (20) étant un gyroscope.

5. Dispositif (10) selon l'une des revendications précédentes, le dispositif de détermination de position (18) possédant un récepteur pour le système GPS ou pour le système Galileo.

6. Dispositif (10) selon l'une des revendications précédentes, lequel possède un élément de fixation (22), le capteur inertiel (20) pouvant être fixé de manière rotative dans l'unité d'acquisition et d'interprétation de signal (12) avec l'élément de fixation (22).

7. Tachygraphe, lequel est disposé dans un véhicule automobile et configuré pour enregistrer des grandeurs dépendantes du mouvement du véhicule automobile et qui possède un dispositif (10) selon l'une des revendications précédentes.
